# EUROPEAN PATENT APPLICATION

(11) **EP 1 416 170 A1**
(43) Date of publication of application: **06.05.2004**
(21) Application number: 03000404.8
(22) Date of filing: 10.01.2003
(51) Int. Cl.: F16B 12/52

(54) **Joint for modular frames of furnishing elements such as tables, desks, shelves or suchlike**

(30) Priority: 30.10.2002 IT UD20020229
(71) Applicant: Odorico, Angelo, 33050 Rivignano (Udine) (IT); Odorico, Marco, 33050 Rivignano (UD) (IT)
(72) Inventor: Odorico, Angelo, 33050 Rivignano (Udine) (IT); Odorico, Marco, 33050 Rivignano (UD) (IT)
(74) Representative: Petraz, Gilberto Luigi

(57) **Abstract**

Joint for frames of furnishing elements consisting of a plurality of components (11, 12, 13) joined together. The joint comprises a plane platelet element (15, 115), lying during use on a first plane. The plane platelet element (15, 115) has on the perimeter attachment teeth (20) which are inserted inside apertures (25) present on at least a first component (13) in order to clamp the first component (13) and the joint (10). The plane platelet element (15, 115) is associated with a back (14b, 31) lying on a plane angled with respect to the first plane on which the plane platelet (15, 115) lies, the back (14b, 31) bearing a hole (17, 117) for the passage of attachment means (29) which anchor on a second component (12) to be attached to the first component (13).

## Description

### FIELD OF THE INVENTION

The present invention concerns a joint for assembling modular frames for furnishing elements such as tables, desks, shelves or suchlike.

The joint according to the invention allows to join together two, three or more components of a frame, of which at least two are angled with respect to each other and lying substantially on a same plane, and a third normally lying on a plane substantially orthogonal to the first two.

The joint is preferentially, but not exclusively, used for the assembly of frames consisting of metal tubular profiles or with an open profile obtained from bent metal sheet; in the following description we shall refer to this specific use although the invention can also be used in other applications.

Moreover, even though the description will refer mainly to profiles with a square, rectangular or in any case polygonal shape, it comes within the field of the invention that the profiles may be circular, oval or any other appropriate shape.

### BACKGROUND OF THE INVENTION

The frames are known of furnishing elements, such as tables, desks, shelves or suchlike, comprising a plurality of components consisting of metal tubular profiles which are joined together. The joints used to join such components can be of various types and generally have a three-dimensional configuration in order to ensure greater structural rigidity to the furnishing element for which they are employed.

Such joints are generally made by welding platelets or other elements possibly shaped according to specific requirements. Therefore, to make them requires a long time and high processing costs, and also the presence of qualified personnel and/or complex and expensive equipment.

Instead of welding, the joints can be made by means of bolting, but that gives a poorer hold, especially over time, and in any case is expensive.

Conventional joints also provide a high number of attachment means to join the components together, which determines long and laborious assembly operations and high production costs.

The Applicants have designed and embodied the present invention to overcome these shortcomings of the state of the art and to obtain further advantages.

### SUMMARY OF THE INVENTION

The present invention is set forth and characterized essentially in the main claim, while the dependent claims describe other innovative characteristics of the invention.

The purpose of the invention is to achieve a joint for the assembly of modular frames of furnishing elements which is simple and economical to build and which will guarantee a good hold, even over time, using a limited number of attachment means.

In one embodiment, the joint according to the invention comprises a platelet with at least a first plane face lying on a first plane and a second face, or back, lying on a plane angled with respect to the first face.

In another embodiment, the joint according to the invention comprises at least a first platelet element, shaped at an angle and lying during use on a first plane, and a second plane platelet element, lying during use on a second plane substantially orthogonal to the first.

The two platelet elements can be coupled together in lock-in manner so as to define a three-dimensional configuration of the joint.

According to a characteristic feature of the present invention, the first plane face of the joint, or the second plane platelet element in the case of the other embodiment, are triangular or trapezoid in shape and are provided on the perimeter, along two of their converging sides, with attachment teeth means, able to be inserted inside mating apertures present on at least two first components of the frame to be joined together, in order to determine the reciprocal clamping of said first components and the joint. The presence of the attachment teeth along the converging sides of the plane faces or platelets determines a drawing action of one or more components to be joined towards the other; the union is then consolidated by means of appropriate attachment means, such as screws or similar.

In a preferential embodiment, the joint comprises two first plane faces, parallel to each other and connected by said second face, or two of said second platelet elements associated, parallel to each other, in correspondence with two opposite edges of the first platelet element.

In a variant embodiment of the invention, the first platelet element has on the edges a plurality of coupling hollows for the second platelet elements. According to a variant, the hollows have a flared mouth.

At least the roots of the attachment teeth means are able to be inserted and clamped inside said hollows, defining the clamping of the first and second platelet elements, with a part of the tooth protruding outside in order to cooperate with the apertures of the components of the frame.

According to a variant, the attachment teeth means include at least a lead-in segment, partly wedge-shaped, able to facilitate the insertion thereof into the mating apertures.

In a preferential embodiment, the first platelet element comprises at least two lateral portions able to cooperate with the surfaces of the first components provided with apertures for the attachment teeth means; said lateral portions define between them an angle mating with the angle of join between the first components to be joined.

According to a variant, the first platelet element has at least an intermediate back, able to cooperate with a third component to be joined, on which seatings are made for attachment means to attach said third component.

The joint according to the invention can be made either in a single piece or by coupling together platelet elements without needing to carry out any welding or bolting. It allows to join a plurality of components by clamping the latter through interference, and requires, only in certain applications, the use of a limited number of attachment means.

According to a variant, in the event of a union of open profiles obtained from bent metal sheet, the attachment teeth means may be present only on one of the plane parallel faces of the joint, while the second plane face may be without them, because it is impossible to make the mating pairs of apertures on each of the opposite edges of the open profile.

According to another variant, in the event of a union of one or more profiles in line with an intermediate profile arranged orthogonal, with a pair of joints arranged opposite and specular with respect to said intermediate profile, one of the two joints has the relative plane face or faces provided with attachment teeth means only on one side, while the other side may be provided only with insertion protrusions. This is because, once the intermediate profile has been clamped with a first joint, it is impossible to insert the attachment teeth on two sides of the joint inside the relative apertures.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is an exploded view of a first embodiment of the joint according to the present invention;
- fig. 2 shows the joint of fig. 1 in an assembled condition;
- fig. 3 shows a detail of the joint in fig. 1;
- fig. 4 is an exploded view of the joint and the components of a frame to be assembled;
- fig. 5 shows an assembly step of a component of fig. 4;
- fig. 6 shows the components of fig. 4 in an assembled condition;
- fig. 7 shows a second embodiment of the joint according to the invention in a dis-assembled condition;
- fig. 8 shows a detail of the joint in fig. 7;
- fig. 9 shows the joint of fig. 7 in an assembled condition;
- fig. 10 shows a view from the front of the joint in fig. 7;
- fig. 11 shows the joint in fig. 7 in a dis-assembled condition in an application with open profiles obtained from bent metal sheet;
- fig. 12 shows a view from the front of the joints used in fig. 11;
- fig. 13 is a schematic view of the section of the coupling zone between joints and open profile;
- fig. 14 is a sectional view of a connection between two profiles orthogonal to each other;
- fig. 15 is a front view of one of the two joints used in the union shown in fig. 14.

### DETAILED DESCRIPTION OF A PREFERENTIAL FORM OF EMBODIMENT OF THE INVENTION

In the attached figures the reference number 10 denotes in its entirety the joint according to the invention, used to assemble frames of furnishing elements. In the embodiment shown here, the joint 10 is used to join together three components 11, consisting of tubular profiles, advantageously metal, comprising an upright 12 and two horizontal elements 13 at angles of 90° to each other.

It is obvious however that the joint 10 can be used to join only two of said components and at different angles. It is also obvious that the components 11 can be of different shapes other than the substantially square shape shown here, for example circular, oval, etc.

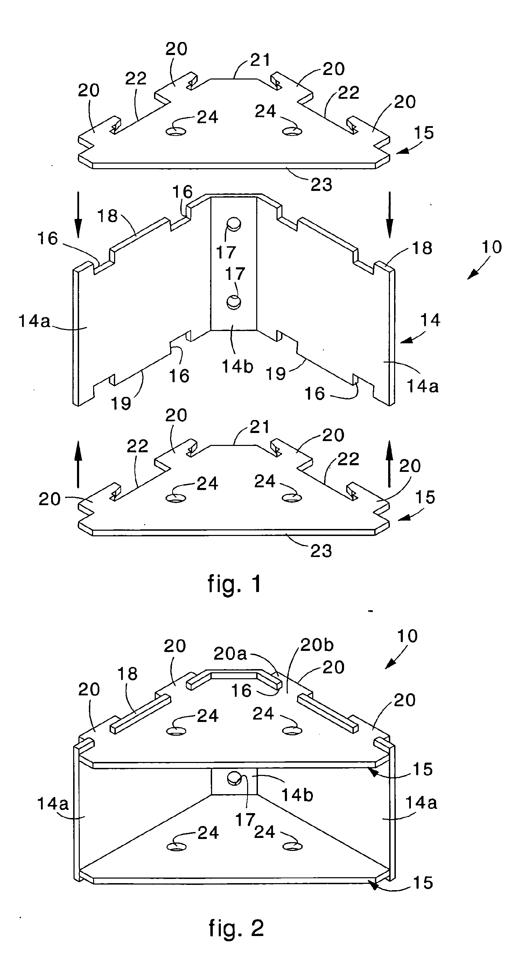

With reference to figs. 1-6, which show a first embodiment of the invention, the joint 10 consists of three platelets able to be associated with each other in lock-in manner; a first platelet, or connection platelet, 14 is shaped and two second platelets 15 are plane (fig. 1). The two second plane platelets 15 are associated one to an upper edge and the other to a lower edge of the first connection platelet 14, as will be described hereafter.

The first connection platelet 14 has two lateral portions 14a, angled with respect to each other by an angle equivalent to that defined between the horizontal elements 13 in their joined condition and, in this case, an intermediate back 14b which joins the lateral portions 14a.

Each lateral portion 14a has two pairs of hollows 16, with a slightly flared mouth, open on the upper 18 and lower 19 side. The intermediate portion, or back, 14b, on the contrary, has two through holes 17 axially aligned.

Each of the two second plane platelets 15 has a conformation substantially like an isosceles trapezoid, with the lesser base 21 of a size mating with the width of the intermediate back 14b and the oblique sides 22, converging towards the upright 12 to be connected, of a size and angle equivalent to those of the lateral portions 14a of the first platelet 14. In this case, the vertices between the oblique sides 22 and the larger base 23 are beveled.

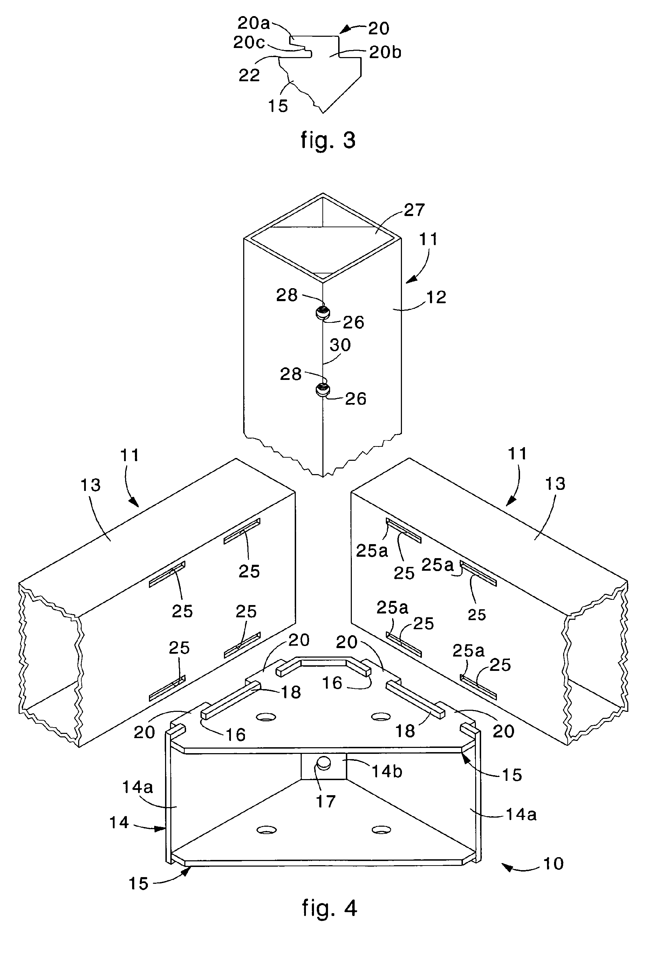

From each oblique side 22 a pair of attachment teeth 20 protrude, able both to associate the second plane platelet elements 15 to the first platelet element 14, and also to clamp the horizontal elements 13 with respect to the joint 10, exerting a drawing action of the horizontal elements 13 towards the upright 12. Said attachment teeth 20 have a first wedge-shaped lead-in segment 20a, facing towards the lesser base 21, and a second connection segment 20b, narrowing towards the inside of the second plane platelet 15; each attachment tooth 20 also defines an abutment surface 20c arranged between the first segment 20a and the second segment 20b (fig. 3).

The second plane platelets 15 also have, in an inner position, a pair of through holes 24 which can be used to attach the supporting surface of the furnishing element.

The joint 10 is assembled simply by coupling the second plane platelets 15 to the first platelet 14 orthogonally, so as to insert the attachment teeth 20, in correspondence with their second connection segment 20b, inside mating hollows 16, thrusting them towards the bottom of the latter. In this condition, exploiting the wedge-shaped conformation of the hollows 16, the attachment teeth 20 are clamped through interference inside them, protruding outwards with the first lead-in segment 20a and with the abutment surface 20c (fig. 2).

In correspondence with the end segment of the horizontal elements 13, two pairs of slits 25 are arranged, able to house the protruding part of the attachment teeth 20.

The upright 12 has two holes 26, made on the edge 30 to be arranged between the two horizontal elements 13, with an interaxis equivalent to that between the two holes 17 of the first platelet 14; inside the upright 12 there is an insert 27 provided with threaded seatings 28 aligned with the two holes 26.

The horizontal elements 13 are associated with the joint 10 by putting, laterally and from the outside, said horizontal elements 13 to the lateral portions 14a of the first platelet 14, so that the teeth 20 enter into the corresponding slits 25.

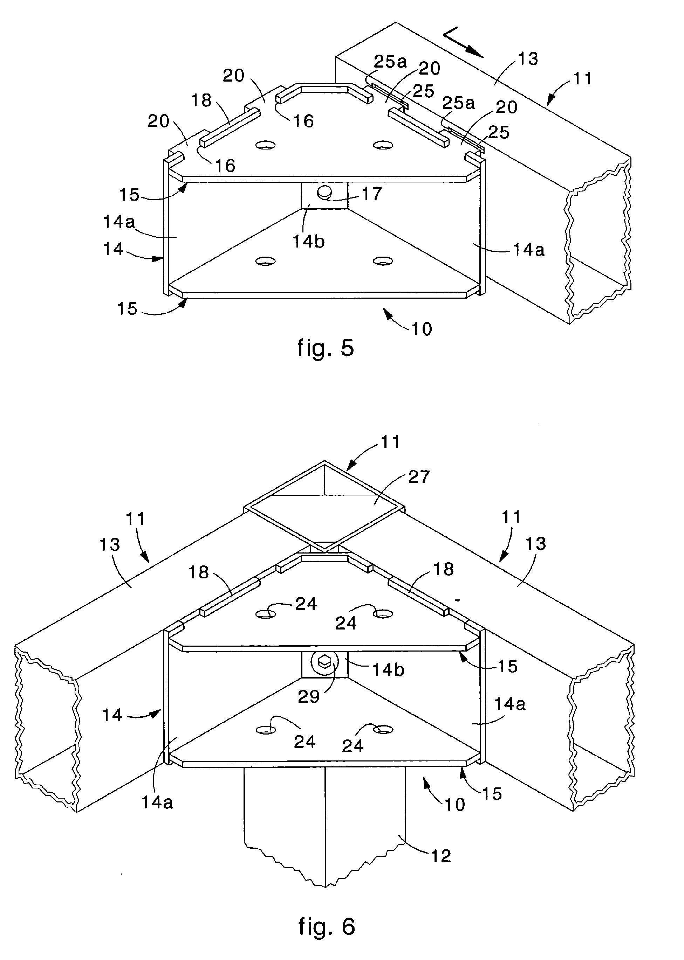

Subsequently, the same horizontal elements 13 are moved longitudinally away from the lesser base 21 of the second platelets 15, as indicated by the arrow in fig. 5, until the lateral edge 25a of the slits 25, sliding along the first wedge-shaped lead-in segment 20a, comes into contact with the abutment surface 20c.

In this condition, the portion of wall of the horizontal elements 13 around the slits 25 is clamped, through interference, between the tooth 20 and the edges 18 and 19 of the lateral portions 14a protruding from the second plane platelets 15.

The hold of such clamping is proportionate to the traction applied to the horizontal elements 13 for their longitudinal movement.

The upright 12 is associated with the joint 10 by bringing the edge 30 near the outer face of the intermediate back 14b of the first platelet 14, avoiding reciprocal contact, so that the two faces adjacent to said edge 30 rest frontally on the respective horizontal elements 13, and aligning the holes 26 with the holes 17 present on the intermediate portion 14b.

Two screws 29, for example with a head having a hexagonal hole, are inserted into the holes 17 and 26 and screwed into the threaded seatings 28 of the insert 27, clamping the upright 12 in an intermediate position between the two horizontal elements 13. Said screws 29 are tightened to bring the upright 12 and the joint 10 reciprocally nearer; this not only ensures the stable attachment of the upright 12, but also makes the latter thrust the horizontal elements 13 even further away from the lesser base 21, improving the clamping thereof on the joint 10.

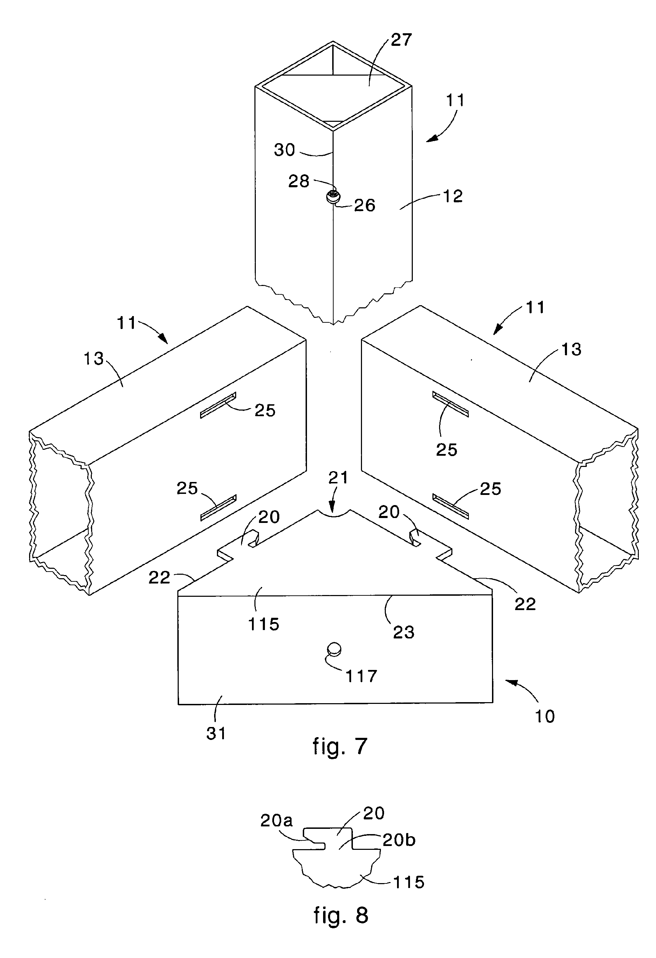

Figs. 7-10 show a second embodiment of the joint 10, wherein the parts identical to those described with reference to the previous figures have been indicated with the same reference number, while the equivalent parts have been indicated with the same reference number preceded by 1.

In this embodiment, the joint 10 is made in a single piece and comprises a shaped platelet which has two plane faces 115, parallel to each other, configured as an isosceles trapezoid with a lesser base 21, oblique sides 22 and a larger base 23. The two plane faces 115 are connected to each other by a back 31 lying on an plane angled, in this case orthogonal, with respect to the plane on which the plane faces 115 lie.

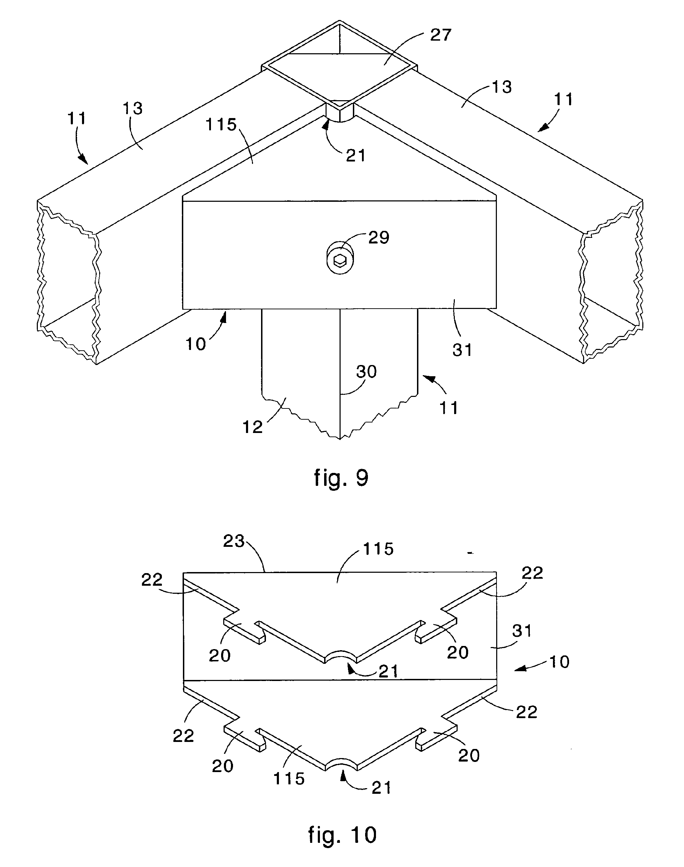

In this embodiment, identically as seen before, an attachment tooth 20 is made on each oblique side 22 of each of the two plane faces 115, and is able to be inserted into the mating slits 25 of the relative horizontal elements 13 (figs. 7 and 10), in order to exert a drawing action, in this case, of the horizontal elements 13 towards the upright 12.

Here too, the attachment tooth 20 has a front lead-in segment 20a which facilitates the coupling with the slits 25 until it abuts against the connection segment 20b.

The lesser base 21 of the plane faces 115 is conformed as an arc of a circle in order to couple with the edge 30 of the upright 12 to be connected to the horizontal elements 13; the back 31 has a hole 117 which aligns with the hole 26 so that the connection screws 29, which anchor in the threaded seatings 28 of the upright 12, can pass.

In this case too, after the attachment teeth 20 have been inserted into the respective slits 25, exploiting the wedge-shaped lead-in segment 20a, the insertion and tightening of the screw 29 into the upright 12 determines a solid clamping due to the traction between the horizontal elements 13 and the upright 12, thanks to the teeth 20 arranged along the oblique sides 22 converging towards the upright 12.

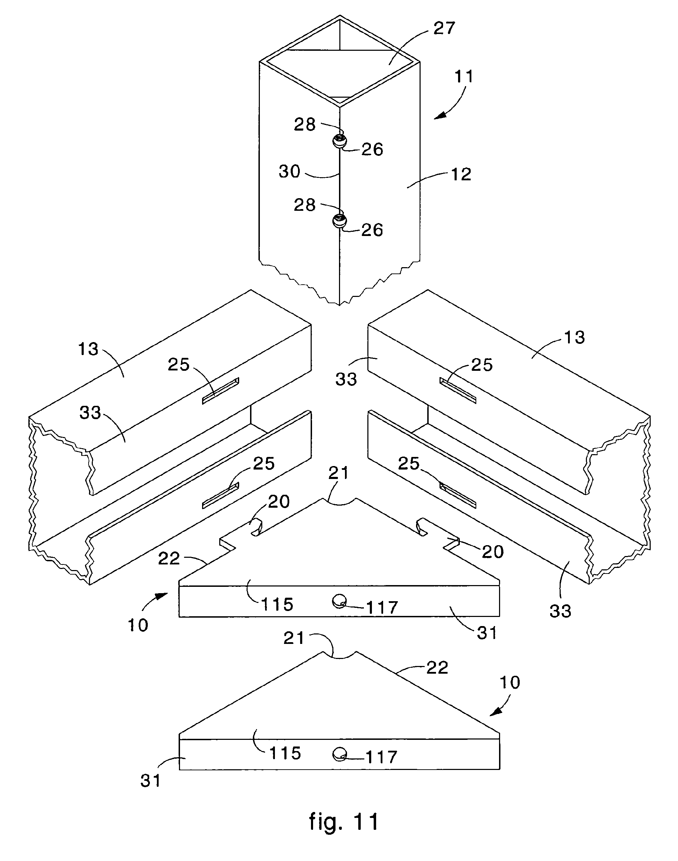

The embodiment shown in figs. 11-13 shows the case where the joint 10 according to the invention is used to join, to an upright 12, horizontal elements 13 consisting of open profiles obtained from bent metal sheet. In this case, two joints 10 are used, of limited height, in cooperation with each of the bent front edges 33 of the horizontal elements 13.

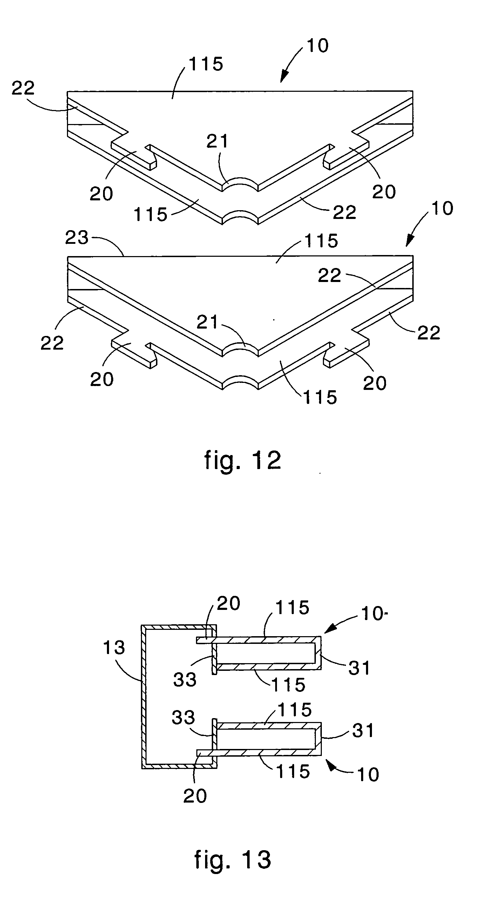

Since it is substantially impossible, for constructional reasons, to make two apertures 25 on top of each other on each of the bent edges 33, the invention provides to use joints 10 wherein only one of the plane faces 115 has, along its oblique sides 22, the attachment teeth 20, while the other face does not have any (fig. 12). In this case, as can be seen in the figures, the joint 10 associated with the upper edge 33 has the teeth 20 in its upper face 115, while the joint 10 associated with the lower edge 33 has the teeth 20 on its lower face. The oblique side 22 without teeth 20 is therefore rectilinear and positioned, when the joint 10 is mounted, in abutment against a relative segment of the relative bent edge 33 (fig. 13).

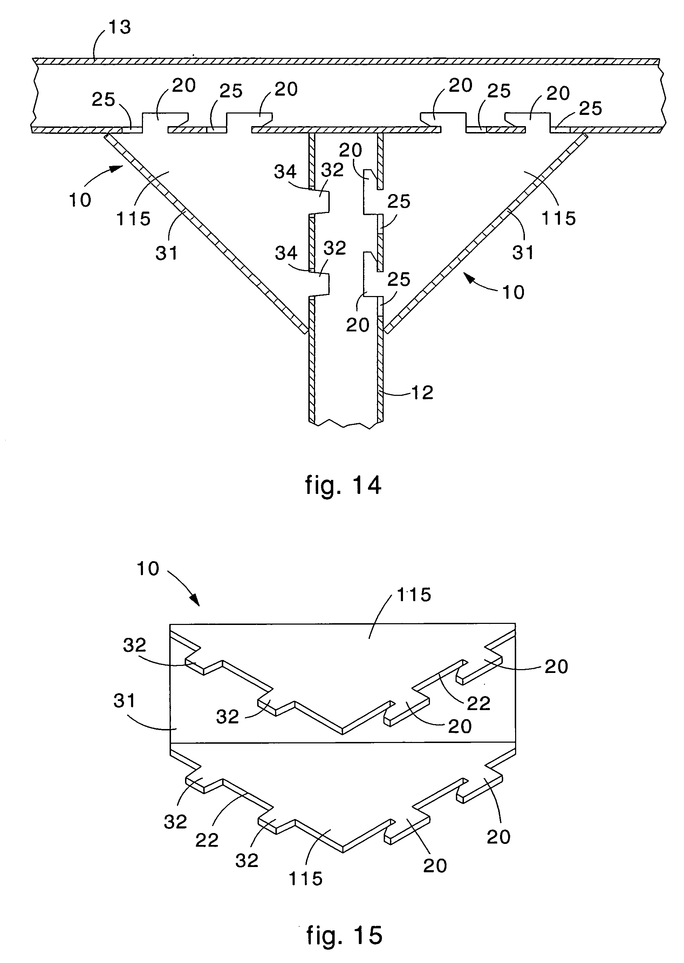

In the other embodiment shown in figs. 14-15, two joints 10 are used to attach a linear horizontal element 13 to an upright 12; the two joints 10 are arranged, specular to each other, on opposite sides with respect to the upright 12.

In this case, while the joint 10 arranged on the right in fig. 14 is of the normal type shown in fig. 10, and is mounted first, the joint 10 arranged on the left, being mounted when the horizontal element 13 and the upright 12 are already joined together, cannot have attachment teeth 20 on both sides because otherwise it would be impossible to apply. In this case, one of the two joints 10 advantageously has the conformation of fig. 15, with attachment teeth 20 arranged on one side and coupling protrusions 32 arranged on the other side, which are inserted into corresponding apertures 34 made on the upright 12.

The protrusions 32 do not exert any drawing effect for the union of upright 12 and horizontal element 13, but this is not a problem since the upright 12 is blocked by the opposite drawing action exerted by the other pairs of teeth 20 which attach themselves to the horizontal element 13 on opposite sides of the upright 12.

It is clear that the side without attachment teeth 20, and having protrusions 32 instead, could be the one which cooperates with the horizontal element 13, instead of the one which cooperates with the upright 12 as in the case shown in fig. 14.

The joint 10 thus allows to achieve, with simple and easy operations, the stable and secure assembly of modular frames for furnishing elements, using a very limited number of attachment means and ensuring in any case a considerable structural rigidity even after said furnishing elements have been in use for a long period.

Modifications and/or additions of parts may be made to the joint 10 as described heretofore, without departing from the field and scope of the present invention.

For example, it could comprise a single second platelet 15 and have attachment teeth 20 of a different number and conformation than those shown.

It is also clear that, although the present invention has been described with reference to specific examples, a person of skill in the art shall certainly be able to achieve many other equivalent forms of joint for modular frames, all of which shall come within the field and scope of the present invention.

## Claims

1. Joint for frames of furnishing elements consisting of a plurality of components (11, 12, 13) able to be joined together, **characterized in that** it comprises at least a plane platelet element (15, 115) lying during use on a first plane, said plane platelet element (15, 115) including two convergent sides equipped with attachment teeth means (20) able to be inserted inside mating apertures (25) present on at least a first component (13) in order to determine the clamping of said at least one first component (13) and the joint (10), said plane platelet element (15, 115) being associated with a back (14b, 31) lying on a plane angled with respect to said first plane on which said plane platelet (15, 115) lies, said back (14b, 31) bearing at least a hole (17, 117) for the passage of attachment means (29) able to anchor on a second component (12) to be attached to said at least one first component (13).

2. Joint as in claim 1, **characterized in that** said attachment teeth means (20) define a clamping through interference of said at least one first component (13) next to said plane platelet element (15, 115).

3. Joint as in claim 1 or 2, **characterized in that** it comprises two plane platelet elements (15) able to be associated, parallel to each other, in correspondence with two opposite edges (18, 19) of a connection platelet element (14), lying on a plane substantially orthogonal to the plane on which said plane platelets (15) lie and able to define said back (14b).

4. Joint as in claim 3, **characterized in that** said connection platelet element (14), on at least one edge (18, 19), has coupling hollows (16) for said at least one second platelet element (15).

5. Joint as in claim 4, **characterized in that** said hollows (16) have the mouth partly flared.

6. Joint as in any claim hereinbefore, **characterized in that** said attachment teeth means (20) have at least a narrow segment (20b) able to determine the association between said connection platelet element (14) and said at least one plane platelet element (15).

7. Joint as in any claim hereinbefore, **characterized in that** said connection platelet element (14) comprises at least two lateral portions (14a) able to cooperate with the surfaces of said first components (13) on which surfaces said apertures (25) are made and defining between them an angle mating with the angle of union between said first components (13).

8. Joint as in claim 1 or 2, **characterized in that** it comprises in a single piece two plane faces (115) parallel to each other and united by a face lying on a plane substantially orthogonal to said plane faces (115) and able to define said back (31).

9. Joint as in any claim hereinbefore, **characterized in that** said plane platelet elements (15, 115) are conformed as an isosceles trapezoid with a greater base (23), oblique sides (22), along which said attachment teeth (20) are made, and a lesser base (21) able to face an edge (30) of said component (12).

10. Joint as in claim 9, **characterized in that** said lesser base (21) is conformed as an arc of a circle in order to couple with said edge (30).

11. Joint as in claim 3 or 7, **characterized in that** it has one of said plane platelets (15) or faces (115) provided with attachment teeth (20), and the other of said plane platelets (15) or faces (115) without attachment teeth and able to couple in abutment against a corresponding segment of the component (11) to be joined.

12. Joint as in claim 9, **characterized in that**, in the case of coupling between a linear profile (13) and an intermediate upright (12) between two joints (10) arranged specularly on opposite sides with respect to said upright (12), one of the two joints (10) has the oblique sides (22) without attachment teeth (20).

13. Joint as in claim 12, **characterized in that**, along said sides (22) without attachment teeth (20), it has insertion protrusions (32) cooperating with mating apertures (34).

14. Joint as in any claim hereinbefore, **characterized in that** said attachment teeth means (20) have at least a lead-in segment (20a), at least partly wedge-shaped, able to facilitate insertion thereof into said apertures (25).

15. Joint as in any claim hereinbefore, **characterized in that** said attachment teeth means (20) have at least an abutment surface (20c) able to cooperate with the edge (25a) of said apertures (25) in order to define the clamping position of said first components (13).

16. Joint as in any claim hereinbefore, **characterized in that** said second platelet elements (15) include holes (24) for the attachment of shelves or similar.
